Europäisches Patentamt

European Patent Office

Office européen des brevets

(19)

(11) Veröffentlichungsnummer : **0 306 630 B1**

(12) **EUROPÄISCHE PATENTSCHRIFT**

(45) Veröffentlichungstag der Patentschrift :
03.07.91 Patentblatt 91/27

(51) Int. Cl.⁵ : **F01N 3/02, F02B 37/12**

(21) Anmeldenummer : 88109347.0

(22) Anmeldetag : 11.06.88

(54) **Verfahren zum Regenieren einer Russfilteranlage im Abgastrakt einer Diesel-Brennkraftmaschine.**

(30) Priorität : 08.09.87 DE 3730035

(43) Veröffentlichungstag der Anmeldung :
15.03.89 Patentblatt 89/11

(45) Bekanntmachung des Hinweises auf die
Patenterteilung :
03.07.91 Patentblatt 91/27

(84) Benannte Vertragsstaaten :
DE FR GB SE

(56) Entgegenhaltungen :
DE-A- 2 027 883
DE-A- 2 655 932
US-A- 4 373 330
US-A- 4 520 624
PATENT ABSTRACTS OF JAPAN, Band 9, Nr.
213 (M-408)[1936], 30. August 1985; & JP-A-60
73 009 (NISSAN JIDOSHA K.K.) 25-04.1985
IDEM

(56) Entgegenhaltungen :
PATENT ABSTRACTS OF JAPAN, Band 10, Nr.
92 (M-468)[2149], 9. April 1986; & JP-A-60 230
507 (ISUZU JIDOSHA K.K.) 16-11-1985
PATENT ABSTRACTS OF JAPAN, Band 10, Nr.
73 (M-463)[2130], 22. März 1986; & JP-A-60 216
017 (NISSAN JIDOSHA K.K.) 29-10-1985
PATENT ABSTRACTS OF JAPAN, Band 8, Nr.
240 (M-336)[1677], 6. November 1984; & JP-
A-59 119 009 (MITSUBISHI JIDOSHA KOGYO
K.K.) 10-07-1984
PATENT ABSTRACTS OF JAPAN, Band 10, Nr.
270 (M-517)[2326], 13. September 1986; &
JP-A-61 93 219 (MITSUBISHI MOTORS CORP.)
12-05-1986

(73) Patentinhaber : Webasto AG Fahrzeugtechnik
Kraillingerstrasse 5
W-8035 Stockdorf (DE)

(72) Erfinder : Görlich, Dieter
Roggensteinerstrasse 62
W-8080 Emmering (DE)

## Beschreibung

Die Erfindung bezieht sich auf ein Verfahren zum Regenerieren einer Rußfilteranlage im Abgastrakt einer Diesel-Brennkraftmaschine mit einer Aufladeeinrichtung nach den Oberbegriff des Patentanspruchs 1.

Aus JP-A-60-216017 ist eine Abgasbehandlungsanlage bei mit einem mit einer Aufladeeinrichtung versehenen Brennkraftnaschine bekannt. Zum Einleiten der Regenerierung beim Arbeiten der Brennkraftmaschine mit niedriger Drehzahl und niedriger Belastung wird über eine Klappensteuerung die Drehzahl der Turbine der Aufladeeinrichtung zur Erhöhung des Ladedrucks erhöht. Hierdurch wird zur Stabilisierung der Verbrennung des Brenners diesem eine größere Menge an Ladeluft zugeleitet. Der Brenner wird hierbei mit einem aufbereiteten Gemisch aus Brennstoff und Brennluft gespeist, und der kritische Betriebsbereich des Brenners bei niedriger Drehzahl und geringer Belastung der Brennkraftmaschine wird durch eine Erhöhung des Ladedrucks der Aufladeeinrichtung stabilisiert. Hierdurch sind Änderungen bei der Aufladeeinrichtung einer Brennkraftmaschine unabdingbar.

Aus JP-A-61-93219 ist eine Brennkraftmaschine mit einer Rußfilteranlage und einer Aufladeeinrichtung bekannt, bei welcher mit Hilfe von Steuerventilen Ladeluft in die zum Rußfilter gehende Abgasleitung eingespeist wird, un die Regenerierung der Rußfilteranlage zu unterstützen. Auch hierbei ergeben sieh Sehwierigkeiten bei der Einleitung und Durchführung der Regenerierung in allen Betriebsbereichen und Belastungsbereichen der Brennkraftmaschine.

Auch gibt es Brenner für eine Regenerierungseinrichtung, welche mit verdichteter Luft betreibbar Sind, wobei jedoch relativ hohe Drücke der zur Verbrennung benötigten Brennluft erforderlich sind. Daher benötigt man hierbei zusätzliche Verdichter, die zu einer zusätzlichen Verteuerung einer solchen Rußfilteranlage führen und hier eine relativ große Leistung verbrauchen.

In der älteren DE-A-37 17 140 ist eine Rußfilteranlage in Abgastrakt einer Diesel-Brennkraftmaschine angegeben, bei der der Brenner der Regenerierungseinrichtung mit Abgas der Diesel-Brennkraftmaschine betrieben wird. Hierbei hat es sieh gezeigt, daß unter n-wissen Betriebsbedingungen im Motorkennfeld der Diesel-Brennkraftmaschine der Sauerstoff-Gehalt des Abgases für ein zuverlässiges Arbeiten des Brenners ungenügend werden kann. Ferner ergibt sieh auch die Sehwierigkeit, daß das vom Brenner erzeugte und zur Regeneration des Rußfilters diendende Gas nur noch wenig Sauerstoff enthält, der für die Rußverbrennung bei der Regenerierung benötigt wird.

In den letzten Jahren wird auf dem Gebiet der Diesel-Brennkraftmaschinen in zunehmendem Maße die Rufladung bzw. Turboaufladung angewandt, bei der unter einen Ladedruck stehende Luft den Zylindern der Brennkraftmaschine eingespeist wird. Eine solehe Aufladeeinrichtung umfaßt üblicherweise eine Turbine in Abgastrakt der Diesel-Brennkraftmaschine und einen zugeordneten Verdichter, dessen Ausgang mit der Lufteinlaßleitung bzw. den Lufteinlaßleitungen der Diesel-Brennkraftmaschine verbunden ist. Bei einer solehen sogenannten aufgeladenen Diesel-Brennkraftmaschine erhält man höhere Leistungen und einen verbesserten Wirkungsgrad bei der Verbrennung.

Der Erfindung liegt die Rufgabe zugrunde, ein Verfahren zum Regenerieren einer Rußfilteranlage im Abgastrakt einer Diesel-Brennkraftmaschine mit einer Aufladeeinrichtung bereitzustellen, bei dem man ein stabiles Arbeiten des Brenners der Regenerierungseinrichtung im Bereich des gesamten Motorkennfeldes der Brennkraftmaschine erhält.

Nach der Erfindung wird hierzu ein Verfahren zum Regenerieren einer Rußfilteranlage im Abgastrakt einer Diesel-Brennkraftmaschine mit einer Aufladeeinriehtung angegeben, das die Merkmale des Patentanspruchs 1 hat.

Bei dieser erfindungsgemäßen Rußfilteranlage wird die unter einen vorbestimmten Ladedruck, der mittels der Aufladeeinrichtung erzeugt wird, stehende Luft dem Brenner zugeleitet, so daß diese als Verbrennungsluft für den Brenner in Vermischung mit Abgas genutzt werden kann. Bei einer solchen aufgeladenen Diesel-Brennkraftmaschine ist somit unter dem gewünchten Druck stehende Luft, die sogenannte Ladeluft, vorhanden, die nach der Erfindung zusätzlich für das Betreiben des Brenners der Regenerierungseinrichtung der Rußfilteranlage genutzt wird. Somit können bei der erfindungsgemäßen Rußfilter-Anlage zusätzliche Verdichter für die Erzeugung unter Druck stehender Luft, die als Verbrennungsluft für den Brenner dient, entfallen, so daß sieh die gesamte Rußfilteranlage wesentlich vereinfacht. Zum anderen kinn der Brenner auch darüber hinaus zuverlässig im gesamten Motorkennfeld der Diesel-Brennkraftmaschine betrieben werden, da er zumindest nicht ausschließlich von dem Sauerstoff-Gehalt des Abgases abhängig ist. Hierdurch vereinfcht sieh auch die Steuerung eines solchen Brenners für die Rußfilter-Regenerierung und man erhält eine verbesserte Betriebszuverlässigkeit, ohne einen relativ großen und kostenintensiven zusätzlichen Konstruktionsaufwand in Kauf nehmen zu müssen.

Da der Brenner auch mit Abgas gespeist wird, lassen sieh insbesondere mögliche Schwierigkeiten verneiden, die ihre Ursache darin haben, daß beispielsweise im Leerlauf der Diesel-Brennkraftmaschine der Druck der von der Aufladeeinrichtung gelieferten Ladeluft nicht ausreicht, um ein zuverlässiges Arbeiten des Brenners in diesem Leerlaufbetriebsbereich zu gewährleisten. Da der Brenner zusätzlich mit Abgas versorgt wird, kann im Leerlauf der Diesel-Brennkraftmaschine der Brenner mit Abgas betrieben werden, das in Leerlaufbetriebszustand einen relativ hohen Sauerstoff-Gehalt hat, der zum zuverlässigen Arbeiten des Brenners ausreicht. Ferner erhält man für den Brenner im gesamten Motorkennfeld solche Arbeitsbedingungen, die den Brenner immer zuverlässig brennfähig machen. Bei niedriger Motorbelastung, wenn also auch der von der Aufladeeinrichtung erzeugte Ladedruck der Ladeluft niedrig ist, wird wenig Ladeluft dem Brenner zugeführt, jedoch hat das zugleich zugemischte Abgas aus dem Abgastrakt einen relativ hohen Sauerstoffgehalt, so daß sieh bein Betreiben des Brenners in diesem Belastungszustand keine Sehwierigkeiten ergeben. Bei großer Motorbelastung hingegen steht die von der Aufladeeinrichtung gelieferte Ladeluft unter einen hohen Ladedruck, so daß viel Ladeluft in den Brenner eingespeist werden kann und in diesem Betriebszustand der Brenner zuverlässig arbeiten kann, obgleich das Abgas im Abgastrakt in diesem Bereich des Motorkennfeldes einen relativ geringen Sauerstoffgehält hat. Durch die Zuführung der Ladeluft zu dem Brenner kann somit der geringe Sauerstoffgehalt des Abgases automatisch kompensiert werden, so daß auch in diesem Motorbelastungsbereich keine Sehwierigkeiten beim Betreiben der Regenerierungseinrichtung zu befürchten sind. Durch diese Maßnahme, daß der Brenner der Regenerierungseinrichtung sowohl mit Abgas als auch mit Ladeluft von der Aufladeeinrichtung gespeist wird, erhält man somit eine automatische über den von der Aufladeeinrichtung gelieferten Ladedruck der Ladeluft geregelten günstigen Betriebsbereich für den Brenner der Regenerierungseinrichtung.

In Abhängigkeit von der Auslegungsform der Rußfilteranlage, die bei vorteilhaften weiteren Ausgestaltungen nach der Erfindung zwei oder mehr parallel geschaltete Rußfilter umfassen kann, kann nach der Erfindung zweckmäßigerweise eine solche Auslegung getroffen werden, daß ein gemeinsamer Brenner für die Regenerierung vorgesehen ist, so daß man in der gesamten Rußfilteranlage, auch wenn sie mehrere Rußfilter umfaßt, nur einen einzigen Brenner benötigt, un einen möglichst geringen Bauaufwand betreiben zu müssen.

Alternativ und insbesondere bei der Verwendung von sogenannten Mehrfilter-Systemen kann es auch zweckmäßig sein, jedem Rußfilter einen Brenner zuzuordnen, so daß die Anzahl der Brenner der Anzahl der Rußfilter entspricht.

Bei dem Brenner der Regenerierungseinrichtung, der sowohl mit Abgas als auch mit Ladeluft von der Aufladeeinrichtung versorgt wird, hat es sich als zweckmäßig erwiesen, den oder die Brenner direkt in der Abgasleitung oder den Abgasleitungen anzuordnen, so daß der Brenner ständig vom Abgas durchströmt wird.

Alternativ kann oder können jedoch der oder die Brenner auch zu der oder den Abgasleitung(en) parallel geschaltet angeordnet werden, um eine ständige Durchströmung des oder der Brenner ait Abgas zu vermeiden.

Um die Ladeluftzufuhr zu dem Brenner oder den Brennern verändern zu können, ist es von Vorteil, wenn eine Regeleinrichtung in der Verbindungsleitung zwischen dem oder den Brennern in der Aufladeeinrichtung vorhanden ist. Diese kann zweckmäßigerweise von einem Ventil und vorzugsweise von einem Magnetventil gebildet werden.

Um einen Durchgang des Abgases bei einer Mischspeisung des Brenners mit Abgas und Ladeluft zu verhindern, kann es zweckmäßig sein, ein Rückschlagventil in der Verbindungs- oder den Verbindungsleitungen zwischen der Aufladeeinrichtung und dem Brenner anzuordnen, das einen übertritt von Abgas in die Verbindungsleitung oder die Verbindungsleitungen unterbindet.

Die Erfindung wird nachstehend an Beispiele unter Rezugnahme auf die beigefügte Zeichnung näher erläutert. Darin Zeigt :

Fig. 1    eine schematische Ansicht einer Rußfilteranlage mit einem einzigen Rußfilter, bei der der Brenner der Regenerierungseinrichtung sowohl mit Abgas im Abgastrakt der Diesel-Brennkraftmaschine als auch mit Ladeluft von der Aufladeeinrichtung versorgt wird,

Fig. 2    eine Fig. 1 ähnliche Ausführungsvariante, bei der der Brenner der Regenerierungseinrichtung jedoch nicht im Abgastrakt der Diesel-Brennkraftmaschine liegt, sondern hierzu parallel geschaltet ist,

Fig. 3    eine schematische Ansicht einer Rußfilteranlage mit zwei parallel geschalteten Rußfiltern als Beispiel eines Mehrfilter-Systems, und

Fig. 4    eine schematische Ansicht einer Ausführungsvariante eines Mehrfilter-Systems, bei dem ähnlich wie in Fig. 3 beispielhaft zwei parallel geschaltete Rußfilter vorgesehen sind.

In den Figuren der Zeichnung sind gleiche oder ähnliche Teile mit denselben Bezugszeichen versehen. Zur Unterscheidung sind die in den Figuren der Zeichnung dargestellten Ausführungsvarianten der Rußfilteranlage insgesamt mit 1a, 1b, 1c und 1d bezeichnet. Die Rußfilteranlagen 1a bis 1d sind für aufgeladene Diesel-Brennkraftmaschinen bestimmt.

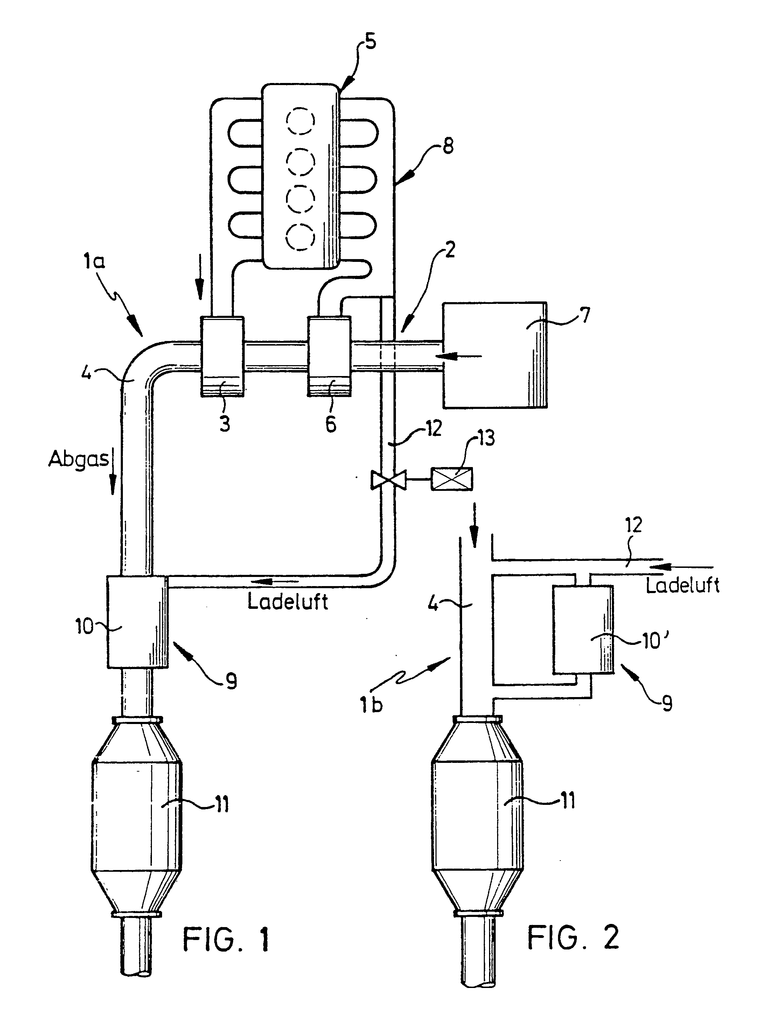

Die in Fig. 1 gezeigte Rußfilteranlage 1a ist als Beispiel für eine Vier-Zylinder-Diesel-Brennkraftmaschine bestimmt, die eine Aufladeeinrichtung 2 hat. Die Aufladeeinrichtung 2 umfaßt eine Turbine 3, die in einem Abgastrakt 4 der Diesel-Brennkraftmaschine 5 angeordnet ist sowie einen Verdichter 6, der übr einen Ansaugfilter 7 Luft ansaugt, diese verdichtet und über einen Auslaß in das Einlaßsystem 8 der Diesel-Brennkraftmaschine 5 einleitet.

Die Regenerierungseinrichtung der Rußfilteranlage 1a ist insgesamt mit 9 bezeichnet. Die Regenerierungseinrichtung 9 weist einen Brenner 10 auf, der im Abgastrakt 4 der Diesel-Brennkraftmaschine 5 angeordnet ist. Im Abgastrakt 4 ist dem Brenner 10 bei dem dargestellten Beispiel ein Rußfilter 11 nachgeschaltet.

Bei dem dargestellten Beispiel geht von dem Einlaß-System 8 der Diesel-Brennkraftmaschine 5, das mit dem Auslaß des Verdichters 6 der Aufladeeinrichtung 2 in Verbindung steht, eine Verbindungsleitung 12 ab, die das Einlaß-System 8 mit dem Brenner 10 verbindet. Wie gezeigt kann in der Verbindungsleitung 12 als Regeleinrichtung beispielsweise ein Magnet-Ventil 13 angeordnet sein.

Bei diesem dargestellten Beispiel der Rußfilteranlage 1a wird der Brenner 10 der Regenerierungseinrichtung 9, wenn der Rußfilter 11 zu regenerieren ist, d.h. die dort gesammelten Rußpartikel abzubrennen sind, sowohl mit Abgas im Abgastrakt 4 als-auch mit Ladeluft von der Aufladeeinrichtung 2 über die Verbindungsleitung 12 versorgt. Mit Hilfe des Magnet-Ventils 13 in der Verbindungsleitung 12 läßt sich die dem Brenner 10 zugeführte Ladeluftmenge regeln.

Wenn die Diesel-Brennkraftmaschine 5 im Leerlauf arbeitet und der Brenner 10 der Regenerierungseinrichtung 9 in Betrieb genommen werden soll, so dient dem Brenner 10 im wesentlichen das Abgas im Abgastrakt 4 als Verbrennungsmedium, da die Aufladeeinrichtung 2 keine Ladeluft mit ausreichendem Druck im Leerlaufbetrieb erzeugen kann. Da das Abgas im Leerlaufbetrieb der Diesel-Brennkraftmaschine 5 jedoch einen hohen Sauerstoffgehalt hat, kann der Brenner 10 auch im Leerlaufbetrieb gezündet und betrieben werden. Sobald die Motorbelastung ansteigt, sich aber beispielsweise noch im niedrigen Belastungsbereich befindet, liefert die Aufladeeinrichtung 2 Ladeluft mit einem niedrigen Ladedruck, die dann zusätzlich in den Brenner 10 eingespeist wird. In diesem Betriebsbereich der Diesel-Brennkraftmaschine 5 fällt dann der Sauerstoffgehalt im Abgas ab, so daß dank der Zuleitung der Ladeluft ein zuverlässiges Zünden und Betreiben des Brenners 10 gewährleistet wird. Bei grober Motorbelastung ist der Ladedruck der Ladeluft von der Aufladeeinrichtung 2 ebenfalls entsprechend hoch, während der Sauerstoffgehalt im Abgas gering wird, so daß von der Aufladeeinrichtung 2 so ausreichend viel Ladeluft abgezweigt wird, daß der Brenner auch in diesem Betriebszustand der Diesel-Brennkraftmaschine 5 zuverlässig arbeiten kann. Bei der erfindungsgemäßen Auslegung der Verfahrens zum Regenerieren der Rußfilteranlage 1a wird somit ermöglicht, daß in Abhängigkeit vom Betriebszustand der Diesel-Brennkraftmaschine 5 immer automatisch durch die zusätzliche Einspeisung der Ladeluft der Aufladeeinrichtung 2 über die Verbindungsleitung 12 im Brenner 10 solche Betriebsverhältnisse vorhanden sind, daß dieser zuverlässig gezündet und betrieben werden kann.

Die in Fig. 2 dargestellte Ausführungsvariante einer Rußfilteranlage 1b ist ebenfalls ein sogenanntes Einfilter-System, wobei die Darstellung der Diesel-Brennkraftmaschine 5 sowie die näheren Einzelheiten der Aufladeeinrichtung 2 weggelassen sind. Als wesentlicher Unterschied zu der Rußfilteranlage 1a ist bei der Rußfilteranlage 1b der Brenner 10' in Fig. 2 nicht im Abgastrakt 4 angeordnet, sondern er ist zu diesem parallel geschaltet, d.h. er liegt in einem sogenannten BypaßZweig. Bei dem in Fig. 2 dargestellten Beispiel wird dem Brenner 10' sowohl Abgas aus dem Abgastrakt 4 als auch Ladeluft von der nicht dargestellten Aufladeeinrichtunt zugeführt. Alle weiteren in Fig. 1 gezeigten Einzelheiten stimmen sinngemäß bei der Ausführungsform der Rußfilteranlage 1b überein. Obgleich nicht näher dargestellt ist, kann es zweckmäßig sein, in der Verbindungsleitung 12 ein Rückschlagventil anzuordnen, das ein Durchgehen von Abgas aus dem Abgastrakt 4 in Richtung zu der Aufladeeinrichtung 2 bzw. dem Einlaß-System 8 der Diesel-Brennkraftmaschine verhindert.

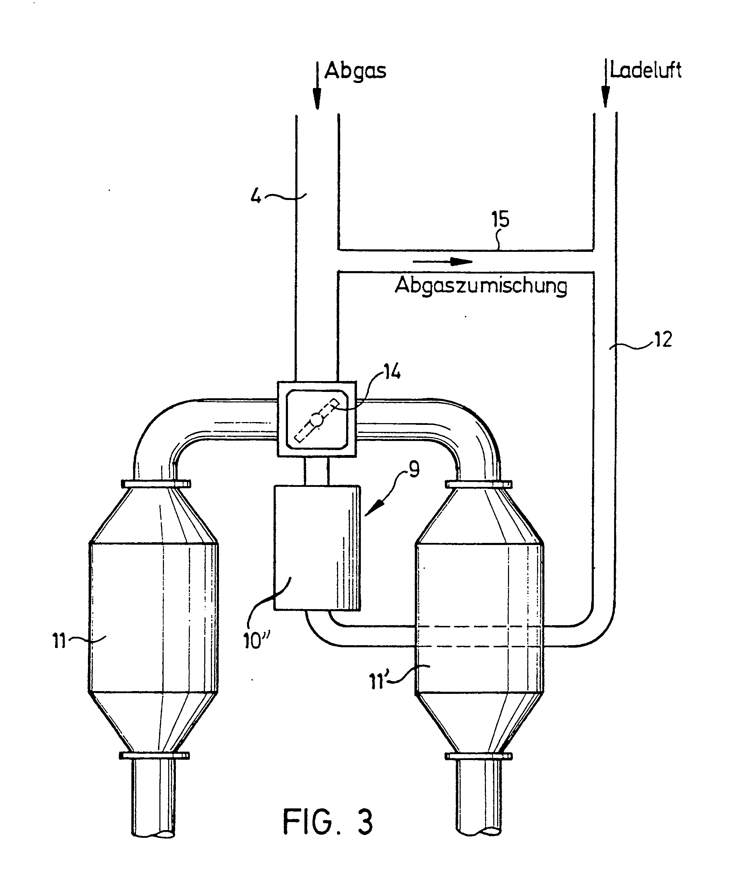

In Fig. 3 ist die Rußfilteranlage insgesamt mit 1c bezeichnet und als Beispiel eines Mehrfilter-Systems ist hierbei eine Auslegung mit zwei parallel geschalteten Rußfiltern 11, 11' gewählt. Hierbei ist der Abgastrakt 4 verzweigt und in dem jeweiligen gebildeten Zweig ist dann der Rußfilter 11 bzw. 11' angeordnet. An der Verzweigungsstelle des Abgastrakts 4 ist eine Klappe 14 angeordnet, die als Steuereinrichtung dient und die den Abgasstrom entsprechend ihrer Stellung durch den einen Rußfilter 11 – wie beim dargestellten Beispiel gezeigt–lenkt. Wenn dieser Rußfilter 11 regeneriert werden muß, so wird die Klappe um etwa 90° aus der in Fig. 3 gezeigten Stellung verdreht und das Abgas im Abgastrakt 4 wird dann dem Rußfilter 11' zugeleitet. Die insgesamt mit 9 bezeichnete Regenerierungseinrichtung umfaßt bei diesem Beispiel einen einzigen Brenner 10", der gemeinsam für die Regenerierung beider Rußfilter 11, 11' bestimmt ist. Der Ausgang des Brenners 10" mündet in den Verzweigungsbereich des Abgastrakts 4 und mittels der Klappe 14 wird dann der vom Brenner 10" erzeugte heiße Abgasstrom zu dem jeweils zu regenerierenden Rußfilter 11 bzw. 11' gelenkt. Dem Brenner 10" wird Ladeluft von der nicht dargestellten Aufladeeinrichtung über die Verbindungsleitung 12 zugeführt. Ferner ist eine Verbindungsleitung 15 dargestellt, über die eine Verbindung zwischen dem Abgastrakt 4 und der von der Aufladeeinrichtung kommenden Verbindungsleitung 12 hergestellt wird. Über diese Verbindungsleitung 15 wird dem Ladeluftstrom in der Verbindungsleitung 12 Abgas zugemischt, so daß der Brenner 10" mit einem Gemisch aus Ladeluft und Abgas aus dem Abgastrakt 4 versorgt wird.

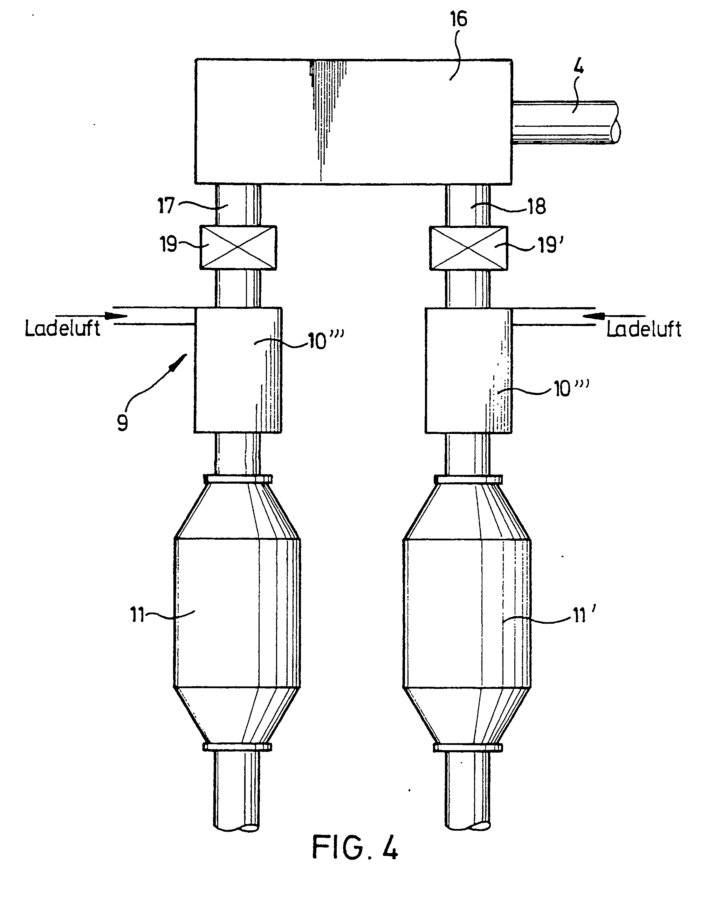

Eine weitere Ausführungsvariante der Rußfilteranlage ist in Fig. 4 insgesamt mit 1d bezeichnet. Im Unterschied zu Fig. 3 zweigen bei der Ausbildungsform nach Fig. 4 von einem Vorschalldämpfer 16 im Abgastrakt 4 zwei parallel verlaufende Abgasleitungen 17, 18 ab, in denen jeweils ein Brenner 10''' angeordnet ist. Den Brennern 10''' sind jeweils Klappen 19, 19' vorgeschaltet, und den Brennern 10''' ist jeweils ein Rußfilter filter 11, 11' nachgeschaltet. Die Klappen 19, 19' dienen dazu, beispielsweise den Filter 11 von der Durchströmung durch das Abgas im Schließzustand abzukoppeln, um diesen Filter 11 zu regenerieren, während dann das Abgas durch den zweiten parallel geschalteten Rußfilter 11' gereinigt wird. Die Klappe 19' in der Abgasleitung 18 ist dann offen. 17 angeordnete Brenner 10''', der mit Ladeluft von der nicht dargestellten Aufladeeinrichtung versorgt wird, wird dann gezündet und in Betrieb genommen, so daß er zur Regenerierung des Rußfilters 11 heiße Verbrennungsgase liefert. Wenn nun bei diesem Beispiel die Klappe 19 bzw. 19' im Schließzustand undicht ist, so erfolgt über den hierbei gebildeten Klappenspalt eine weitere Zumischung von Abgas aus dem Abgastrakt 4. Die Klappen 19, 19' sind derart auslegt, daß in der Schließstellung immer ein gewisser Leckweg vorhanden ist und die Brenner 10''' in Fig. 4 im Mischbetrieb von Ladeluft und Abgas im Abgastrakt 4 betrieben werden.

Beim Mischbetrieb der in den Zeichnungen dargestellten Brennern, d.h. wenn diese mit Abgas und Ladeluft versorgt werden, erhält man die eingangs in Verbindung mit Fig. 1 erläuterte Funktionsweise.

Natürlich können auch bei den Ausführungsformen nach den Fig. 2 bis 4 Regelventile u.dgl. in der Verbindungsleitung 12 und/oder der Verbindungsleitung 15 in Fig. 3 vorgesehen sein, um die Ladeluftzufuhr zu dem Brenner 10, 10'. 10'', 10''' in entsprechender Weise zu steuern. Selbstverständlich ist die Erfindung nicht auf das als Beispiel dargestellte Doppelfilter-System oder Einfilter-System einer Rußfilteranlage 1a bis 1d beschränkt, sondern es können natürlich auch mehr als zwei Rußfilter vorgesehen sein, wobei die Auslegung dann in analoger Weise zu den Fig. 3 bis 4 getroffen ist. Die Anzahl der in der Rußfilteranlage 1a bis 1d vorgesehenen Rußfilter 11 bis 11' hängt im wesentlichen von der Größe der Diesel-Brennkraftmaschine und/oder gegebenenfalls dem vorhandenen Platzbedarf ab. Bei Doppel- und Mehrfilter-Systemen ergibt sich der Vorteil, daß relativ wenig Luft der Aufladeeinrichtung für das Betreiben der Brenner 10, 10', 10'', 10''' der Aufladeeinrichtung entnommen wird, um nachteilige Beeinflußugen auf den Aufladebetrieb der Diesel- Brennkraftmaschine 5 zu verhindern. Dieser Vorteil ist insbesonders wesentlich, wenn bei der Rußfilteranlage 1a bis 1d eine Zumischung von Abgas aus dem Abgastrakt 4 erfolgt.

## Ansprüche

1. Verfahren zum Regenerieren einer Rußfilteranlage im Abgastrakt einer Diesel-Brennkraftmaschine mit einer Aufladeeinrichtung, deren Verdichter über einen Auslaß mit einem Einlaßsystem der Brennkraftmaschine verbunden ist, wenigstens einem in einer Abgasleitung angeordneten Rußfilter und einer Regenerierungseinrichtung mit wenigstens einem Brenner, dem unter Ladedruck der Aufladeeinrichtung stehende Ladeluft zugeleitet wird, dadurch **gekennzeichnet**, daß zur Stabilisierung des Betriebs des Brenners bei sich veränderndem Belastungszustand der Brennkraftmaschine der Brenner der Regenerierungseinrichtung sowohl mit Abgas der Brennkraftmaschine als auch mit der Ladeluft von der Aufladeeinrichtung derart gespeist wird, daß bei Leerlauf oder geringer Belastung der Brennkraftmaschine im wesentlichen das Abgas als Verbrennungsgas und bei großer Belastung die Ladeluft in zunehmendem Maße zusätzlich eingespeist wird.

2. Verfahren nach Anspruch 1, dadurch **gekennzeichnet**, daß bei zwei oder mehr parallel geschalteten Rußfiltern für die Regenerierung ein geneinsamer Brenner verwendet wird.

3. Verfahren nach Anspruch 1, dadurch **gekennzeichnet**, daß bei zwei oder mehr parallel geschalteten Rußfiltern bei jedem ein Brenner verwendet wird.

4. Verfahren nach einen der vorangehenden Ansprüche, dadurch **gekennzeichnet**, daß der oder die Brenner in der Abgasleitung(en) angeordnet wird oder werden.

5. Verfahren nach einem der Ansprüche 1 bis 3, dadurch **gekennzeichnet**, daß der oder die Brenner zu der oder den Abgasleitungen(en) parallel geschaltet wird oder werden.

6. Verfahren nach einen der vorangehenden Ansprüche, dadurch **gekennzeichnet**, daß in der den oder die Brenner mit der Aufladeeinrichtung verbindenden Verbindungsleitung eine Regeleinrichtung vorgesehen wird.

7. Verfahren nach Anspruch 6, dadurch **gekennzeichnet**, daß die Regeleinrichtung von einem Ventil, vorzugsweise einem Magnetventil, gebildet wird.

8. Verfahren nach einem der Ansprüche 1 bis 7, dadurch **gekennzeichnet**, daß der Durchgang von Abgas zur Rufladeinrichtung in der Verbindungsleitung ein Rückschlagventil vorgesehen wird.

## Claims

1. Process for regenerating a soot filtering unit in the exhaust section of a diesel internal combustion engine with a supercharger, whose compressor is connected via an outlet with an intake system of the internal combustion engine, at least one soot filter located in an exhaust pipe and a regenerating device with at least one burner, to which is supplied an air charge under the supercharging pressure of the supercharger, characterized in that for stabilizing the operation of the burner in the case of a varying load state of the internal combustion engine the burner of the regenerating device is supplied both with exhaust gas from the internal combustion engine and with the air charge from the supercharger in such way that when the internal combustion engine is idling or under low load the exhaust gas is fed in as combustion gas, whereas under high load the air charge is increasingly additionally fed in.

2. Process according to claim 1, characterized in that in the case of two or more parallel-connected soot filters for regeneration, use is made of a joint burner.

3. Process according to claim 1, characterized in that with two or more parallel-connected soot filters a burner is used for each of them.

4. Process according to one of the preceding claims, characterized in that the burner or burners are positioned in the exhaust pipe or pipes.

5. Process according to one of the claims 1 to 3, characterized in that the burner or burners are connected in parallel to the exhaust pipe or pipes.

6. Process according to one of the preceding claims, characterized in that a regulating device is provided in the connecting pipe connecting the burner or burners to the supercharger.

7. Process according to claim 6, characterized in that the regulating device is formed by a valve, preferably a solenoid valve.

8. Process according to one of the claims 1 to 7, characterized in that for preventing the passage of exhaust gas to the supercharger a non-return valve is located in the connecting pipe.

## Revendications

1. Procédé de régénération d'une installation de filtre de suie dans un système d'échappement de moteur diesel avec un dispositif de suralimentation, dont le compresseur est relié par une sortie à un système d'injection du moteur, avec au moins un filtre de suie disposé dans une tubulure d'échappement et un dispositif de régénération avec au moins un brûleur auquel on injecte sous la pression du dispositif de suralimentation de l'air comprimé, caractérisé en ce que, pour stabiliser le fonctionnement du brûleur en fonction du régime variable du moteur, on injecte dans le brûleur du dispositif de régénération aussi bien du gaz d'échappement du moteur que de l'air comprimé du dispositif de suralimentation de sorte qu'au ralenti ou à faible régime du moteur on injecte essentiellement le gaz d'échappement comme gaz de combustion et qu'à régime élevé on ajoute en plus en proportion croissante de l'air comprimé.

2. Procédé selon la revendication 1, caractérisé en ce qu'on utilise un brûleur commun pour deux ou plusieurs filtres de suie branchés en parallèle.

3. Procédé selon la revendication 1, caractérisé en ce qu'on utilise un brûleur pour chaque filtre quand il y en a deux ou plusieurs branchés en parallèle.

4. Procédé selon l'une des revendications précédentes, caractérisé en ce qu'on installe le ou les brûleurs sur la (ou les) tubulure(s) de gaz d'échappement.

5. Procédé selon l'une des revendications 1 à 3, caractérisé en ce qu'on branche le ou les brûleurs en parallèle de la ou les tubulures d'échappement.

6. Procédé selon l'une des revendications précédentes, caractérisé en ce qu'on prévoit un dispositif de régulation sur la tubulure de liaison reliant le ou les brûleurs au dispositif de suralimentation.

7. Procédé selon la revendication 6, caractérisé en ce que le dispositif de régulation est constitué d'une vanne, de préférence une électrovanne.

8. Procédé selon l'une des revendications 1 à 7, caractérisé en ce qu'on prévoit, pour le passage du gaz d'échappement vers le dispositif de suralimentation un clapet anti-retour sur la tubulure de liaison.

FIG. 1

FIG. 2

FIG. 3

16

4

17 18

19 19'

Ladeluft 10'''' Ladeluft

9 10''''

11 11'

FIG. 4